# EUROPÄISCHE PATENTSCHRIFT

(11) **EP 2 814 636 B1**
(45) Veröffentlichungstag und Bekanntmachung des Hinweises auf die Patenterteilung: **15.02.2017**
(21) Anmeldenummer: 13720221.4
(22) Anmeldetag: 15.02.2013
(51) Int. Cl.: B24B 39/04

(54) **VERFAHREN ZUM ERHÖHEN DER FESTIGKEIT VON WELLEN, INSBESONDERE VON KURBELWELLEN**
METHOD FOR INCREASING THE STRENGTH OF SHAFTS, IN PARTICULAR OF CRANKSHAFTS
PROCÉDÉ PERMETTANT D'AUGMENTER LA RÉSISTANCE D'ARBRES, NOTAMMENT DE VILEBREQUINS

(30) Priorität: 16.02.2012 DE 102012003476
(43) Veröffentlichungstag der Anmeldung: 24.12.2014
(73) Patentinhaber: Hegenscheidt-MFD GmbH & Co. KG, 41812 Erkelenz (DE)
(72) Erfinder: KNIPPING, Daniel, 52525 Waldfeucht (DE); HOCHBEIN, Helmut, 57072 Siegen (DE)
(74) Vertreter: Patentanwälte Findeisen & Neumann
(86) Internationale Anmeldenummer: PCT/DE2013/000097
(87) Internationale Veröffentlichungsnummer: WO 2013/120480

(56) Entgegenhaltungen:
- JP-A- 04 115 866
- JP-A- H04 191 327
- US-A1- 2009 307 886

## Beschreibung

Die Erfindung betrifft eine technische Lösung zum Erhöhen der Festigkeit von tragenden Flächen an Wellen, insbesondere von zylindrischen Flächen an Kurbelwellen, die spanabhebend vorbearbeitet sind, wobei die zylindrischen Flächen der Haupt- und Hublagerzapfen und gegebenenfalls auch des Zapfens von Kurbelwellen zusätzlich Ölbohrungen aufweisen.

Kurbelwellen für Verbrennungsmotoren für Personenkraftwagen sind Großserienteile mit Stückzahlen im Millionenbereich. Dabei werden geschmiedete Kurbelwellen aus Stahl bevorzugt für hoch belastete Kurbelwellen (z.B. bei Dieselmotoren) verwendet. Deutlich kostengünstiger sind Kurbelwellen aus Gusseisen, die bevorzugt im Bereich von normalbelasteten Motoren eingesetzt werden. Der Fortschritt der Motorenentwicklung führt zu höheren Gaskräften und somit zu höher belasteten Kurbelwellen, wobei aus Gründen des Energieverbrauchs die Lagerabmessungen kleiner werden (Stichwort "Downsizing"). Die Tragfähigkeit der Lager der Kurbelwellen aus Stahl oder Guss wird damit zunehmend erschöpft.

Hochbelastete Lager arbeiten dabei teilweise im Mischreibungsgebiet und das bei modernen Fahrzeugen übliche Ausschalten der Motoren im lastlosen Zustand mit Start-Stop-Zyklen verschleißt die Lager zusätzlich. Die Lagerspalte beim Betrieb der Motoren liegen rechnerisch im Bereich bis unter 1 µm. Hochbelastete Lager sind sehr formgenau und verlangen aufgrund der chemischen Affinität zum Metall der Lagerschale eine sehr geringe Oberflächenrauheit. Eine gehärtete Lagerlauffläche bietet Vorteile beim Transport und Handhaben der Kurbelwelle sowie hinsichtlich der Lagertragfähigkeit. Um diese Vorteile zu nutzen, ist nur eine sehr geringe Härtetiefe im Bereich von 1/10 mm notwendig.

Zum Schutz der Öllochbohrungen findet das Härten ebenfalls Anwendung.

Aber nicht nur Kurbelwellen weisen tragende Flächen an den Haupt- und Hublagern sowie am Zapfen auf. Auch Nockenwellen haben vergleichbare tragende Flächen, die sich auf den Köpfen der Zylinderventile abwälzen. Allerdings haben die tragenden Flächen von Nockenwellen im Unterschied zu tragenden Flächen von Kurbelwellen einen Querschnitt, der sich aus einem Groß- und einem Kleinkreis zusammensetzt. Für beide Arten von Wellen ist das Erhöhen der Festigkeit der tragenden Flächen gleichermaßen vorgesehen.

Das Härten von tragenden Flächen durch beispielsweise Induktionshärten oder Nitrieren ist dem einschlägigen Fachmann hinreichend bekannt. Ebenso verhält es sich mit den Einrichtungen zum Festwalzen von Lagerradien, so dass auf eine Beschreibung von derartigen Einrichtungen im Rahmen der vorliegenden Erfindung verzichtet werden kann. Im Vergleich mit dem Härten ist das Festwalzen ein kostengünstiges und sehr umweltfreundliches Verfahren. Beim Festwalzen wird die Lauffläche unter hohem Druck von einem aus Werkzeugstahl oder Hartmetall bestehenden Festwalzkörper verformt und festgewalzt. Festgewalzte Oberflächen zeichnen sich durch positive Druckeigenspannungen bis zu einer Tiefe im mm-Bereich aus. Durch das Festwalzen wird somit die Festigkeit auch nach den nachfolgenden Feinbearbeitungsprozessen sichergestellt und die Lagerlauffläche widerstandsfähiger gemacht gegen Oberflächenbeschädigungen beim Montagetransport oder im Motorlauf. Dadurch wird auch der Lagerverschleiß im Motorbetrieb verringert. Die Gleitlagerschalen der Gegenlaufflächen haben folglich eine längere Lebensdauer.

Hieraus ergibt sich die Aufgabe der vorliegenden Erfindung, anstelle durch Härten die Festigkeit der Laufflächen an Haupt- und Hublagern sowie am Zapfen- und Flanschdurchmesser von Kurbelwellen aus Stahl oder Guss oder sonstigen metallischen Zusammensetzungen durch Festwalzen zu erhöhen und somit die Lebensdauer von Verbrennungsmotoren zu steigern. Die Steigerung der Festigkeit der Öllochbohrungen soll ebenfalls durch Festwalzen anstelle von Härten erfolgen.

Der Anmelderin ist ein einschlägiger Stand der Technik bekannt, insbesondere aus JP 2006 34 6801 A1 und US 2009/397886 A1 , die nachfolgend erläutert werden.

Aus JP 2006 34 6801 A1 ist bekannt, das Gefüge der Oberfläche eines Lagerzapfens einer Kurbelwelle zu verbessern, der keine seitlichen Einstiche aufweist, und zugleich den Lagerzapfen auf besondere Weise glatt zu walzen, auch wenn er eine Ölbohrung hat. Dazu ist ein Paar von Glattwalzrollen vorgesehen, die in identischer Scheibenform ausgestaltet sind. Auf ihrem Umfang, der auf dem Lagerzapfen abrollt, haben die Glattwalzrollen einen ersten bis vierten Vorsprung, zwischen denen sich in der axialen Richtung gleichgroße Zwischenräume befinden. Die Zwischenräume zwischen angrenzenden Vorsprüngen sind größer als der Innendurchmesser einer Ölbohrung. Bei einer auf diese Weise glattgewalzten Oberfläche wird demnach auf eine nachträgliche spanabhebende Bearbeitung mit geringer Spantiefe offensichtlich verzichtet, so dass in den Lagerzapfen eine Wellenstruktur eingewalzt wird. Die Ölbohrungen werden ausdrücklich nicht bearbeitet.

Aus US 2009/307886 A1 sind ein Verfahren und eine Vorrichtung zum Glattwalzen von Kurbelwellen bekannt. Ein Paar scheibenförmige Glattwalzrollen sind auf gleicher Höhe einander gegenüberliegend zu beiden Seiten eines Lagerzapfens einer Kurbelwelle angeordnet. Die Kurbelwelle wird von einer Antriebsquelle in Umdrehung versetzt. Das Paar Glattwalzrollen wird in einer Richtung voneinander weg bewegt, während der Lagerzapfen der Kurbelwelle von den äußeren Umfangsflächen der Glattwalzrollen gehalten wird, die das Glattwalzen der Kurbelwelle bewirken. In dieser Veröffentlichung wird jedoch nichts darüber ausgesagt, ob zugleich mit dem Glattwalzen eine Oberflächenstruktur in die glattgewalzten Lagerzapfen eingebracht wird.

Die Aufgabe der vorliegenden Erfindung wird dadurch gelöst, dass man wenigstens eine tragende Fläche mit wenigstens einem zylindrischen Festwalzkörper festwalzt, der eine Oberflächenstruktur aufweist und sich über die Breite der tragenden Fläche erstreckt und dass man abschließend die festgewalzte tragende Fläche mit geringer Spantiefe spanabhebend bearbeitet.

Vorzugsweise wird mit drei zylindrischen Festwalzkörpern gleichzeitig festgewalzt. Bevorzugt werden die tragenden zylindrischen Flächen an den Haupt- und Hublagerzapfen von Kurbelwellen festgewalzt. Aber auch der Flansch einer Kurbelwelle kann so bearbeitet werden, um dessen Oberflächenfestigkeit zu erhöhen und somit das Entstehen von Riefen zu vermeiden, die sich im Laufe des Betriebs ausbilden und durch die Öl hindurch sickern kann.

Auch der Zapfen einer Kurbelwelle, der gegebenenfalls eine Ölbohrung aufweist, wird auf die gleiche Weise festgewalzt.

Bevorzugt werden Haupt- und Hublagerzapfen sowie der Zapfen von Kurbelwellen mit einem zylindrischen Festwalzkörper festgewalzt, der im Bereich der Ölbohrung eine punktförmige Verdickung hat.

Es wird mit mehreren zylindrischen Festwalzkörpern festgewalzt, die Verdickungen aufweisen, welche sich über die Breite der festzuwalzenden zylindrischen Fläche aneinander reihen.

Nachdem man mit Festwalzkörpern festwalzt, die eine strukturierte Oberfläche haben, ist eine spanabhebende Nachbearbeitung mit geringer Spantiefe erforderlich, um die Formgenauigkeit der festgewalzten Flächen wieder herzustellen. Die dermaßen nachbearbeiteten tragenden Flächen werden abschließend noch geglättet, beispielsweise durch Glattwalzen oder durch eine Oberflächenbehandlung mit einem Laserstrahl.

Bei einem Festwalzwerkzeug zum Durchführen des Verfahrens ist wenigstens ein zylindrischer Festwalzkörper und wenigstens ein Stützelement vorgesehen, das bezogen auf den Querschnitt der festzuwalzenden tragenden Fläche dem Festwalzkörper gegenüberliegt, wobei der Festwalzkörper auf seiner zylindrischen Oberfläche Verdickungen oder Einkerbungen aufweist, die entweder in Umfangsrichtung oder in axialer Richtung oder diagonal zur axialen Richtung verlaufen.

Als geeignet hat sich ein Festwalzkörper erwiesen, der auf seiner zylindrischen Oberfläche Einkerbungen aufweist, welche einem Rautenmuster ähneln. Bei der Verwendung von mehreren Festwalzkörpern ist vorgesehen, dass sie, bezogen auf den Querschnitt der festzuwalzenden tragenden Flächen, einander gegenüberliegen.

Bei der Verwendung von drei Festwalzkörpern in einem Festwalzwerkzeug hat es sich als vorteilhaft erwiesen, wenn diese drei Festwalzkörper, bezogen auf den Querschnitt der festzuwalzenden tragenden Fläche, eine dreieckige Anordnung haben.

Vorteilhaft ist es, wenn die Oberflächenstrukturen von wenigstens zwei Festwalzkörpern einander nachfolgen. Bei drei Festwalzkörpern kann ein Festwalzkörper als Stützkörper ausgebildet sein, der eine glatte zylindrische Oberfläche aufweist. Einer der Festwalzkörper sollte jedoch auf seiner ansonsten glatten zylindrischen Oberfläche eine punktförmige Verdickung haben, die genau an der Stelle vorgesehen ist, welche beim Abwälzen des Festwalzkörpers auf einer tragenden Fläche auf eine - dort vorhandene - Ölbohrung auftrifft.

Nachfolgend wird die Erfindung an einem Ausführungsbeispiel näher beschrieben. Es zeigen jeweils nicht maßstäblich sowie weitgehend schematisch
Fig. 1 einen Längsabschnitt einer Kurbelwelle
Fig. 2 zwei zueinander gehörende Festwalzkörper jeweils in Stirn- und Seitenansicht
Fig. 3 einen weiteren Festwalzkörper in der Stirn- und Seitenansicht
Fig. 4 einen weiteren Festwalzkörper mit einer punktförmigen Verdickung in der Stirn- und Seitenansicht sowie in der Draufsicht
Fig. 5 eine mögliche Anordnung von Festwalzkörpern innerhalb eines Festwalzwerkzeugs
   sodann nachfolgend jeweils in verkleinertem Maßstab die
Fig. 6 die Hauptlagerzapfen sowie den Zapfen und den Flansch einer Kurbelwelle
Fig. 7 die Hublagerzapfen
Fig. 8 den Verlauf der Ölbohrungen an Kurbelwellen

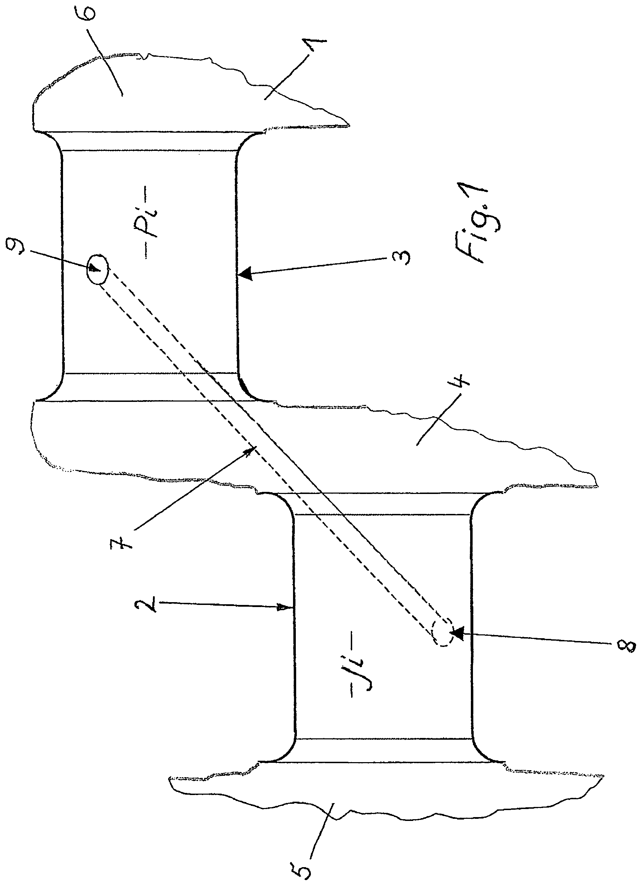

In Fig. 1 ist ein Längenabschnitt aus einer Kurbelwelle 1 mit einem Hauptlagerzapfen Ji und einem Hublagerzapfen Pi dargestellt. Die tragenden zylindrischen Flächen sind mit den Ziffern 2 und 3 bezeichnet. Zwischen dem Hauptlagerzapfen Ji und dem Hublagerzapfen Pi ist ein Abschnitt aus einer Wange 4 angedeutet. Weitere Wangenabschnitte 5 und 6 schließen sich an den äußeren Enden der Fig. 1 an. Angedeutet mit unterbrochenen Linien ist auch eine Ölbohrung 7 mit ihren jeweiligen Mündungen 8 und 9 auf den tragenden zylindrischen Flächen 2 bzw. 3.

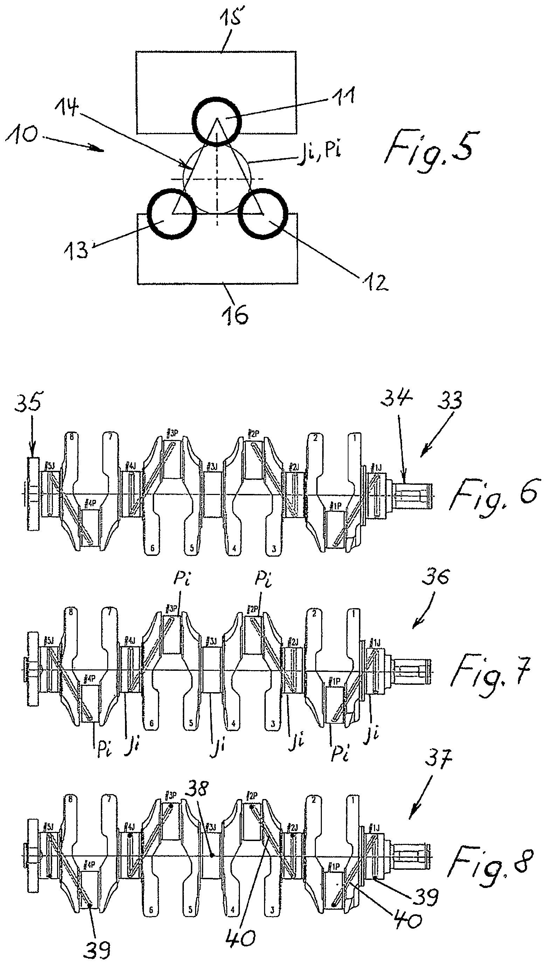

Es ist nun vorgesehen, die tragenden zylindrischen Flächen 2 und 3 mit einem Festwalzwerkzeug 10 festzuwalzen, wie es in der Fig. 5 dargestellt ist. Bei dem Festwalzwerkzeug 10 sind drei zylindrische Festwalzkörper 11, 12 und 13 um einen Hauptlagerzapfen Ji oder einen Hublagerzapfen Pi herum angeordnet. Wie man der Fig. 5 unschwer entnehmen kann, haben die drei Festwalzkörper 11, 12 und 13 die Konfiguration eines Dreiecks 14. Während der Festwalzkörper 11 in einem eigenen Festwalzgehäuse 15 gelagert ist, sind es die Festwalzkörper 12 und 13 in einem gemeinsamen Gehäuse 16.

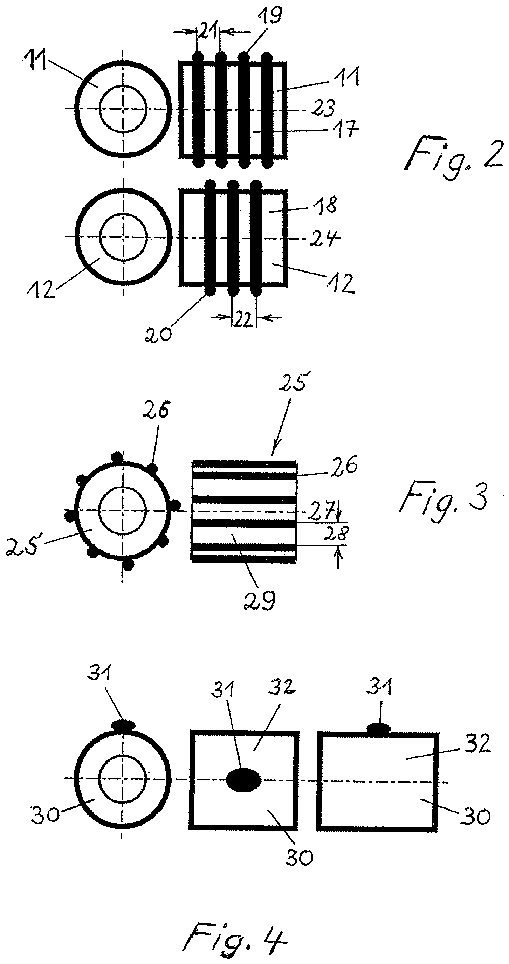

Beispielsweise haben die Festwalzkörper 11 und 12, wie sie in Fig. 2 sowohl in der Seiten- als auch in der Stirnansicht dargestellt sind, auf ihren zylindrischen Oberflächen 17 und 18 Verdickungen 19 bzw. 20. Bei den Verdickungen 19 und 20 handelt es sich um wulstförmige Erhebungen, die sich über den Umfang der jeweiligen zylindrischen Oberflächen 17 und 18 erstrecken. Man erkennt, dass sich zwischen den jeweiligen Verdickungen 19 des Festwalzkörpers 11 immer eine Lücke 21 befindet. Das gleiche trifft zu bei den Verdickungen 20 auf der zylindrischen Oberfläche 18 des Festwalzkörpers 12 mit den Verdickungen 20. Auch hier besteht zwischen den Verdickungen 20 jeweils eine Lücke 22. Wie man weiter in Fig. 2 erkennen kann, liegen die Verdickungen 20 des Festwalzkörpers 12 genau den Lücken 21 des Festwalzkörpers 11 gegenüber. Das heißt, die Verdickungen 19 und 20 reihen sich in Richtung der Drehachsen 23 und 24 der Festwalzkörper 11 und 12 aneinander. Durch dieses Aneinanderreihen entsteht auf den festgewalzten tragenden Flächen 2 und 3 ein durchgängiges Muster. Die Verdickungen 19 und 20 sind nicht hoch, sie erheben sich zwischen 0,1 bis 0,5 mm über die jeweiligen zylindrischen Oberflächen 17 und 18. Ihre Breite ist ebenfalls gering und liegt zwischen 0,1 und 0,5 mm vorzugsweise 0,2 mm. Das gleiche trifft zu für die Abstände 21 und 22, sie liegen in der Regel zwischen 0,1 und 1,0 mm, vorzugsweise 0,5 mm auseinander. Gleichwohl wird durch das Festwalzen der tragenden Oberflächen 2 und 3 dort eine positive Druckeigenspannung erzeugt, die bis zu einer Tiefe im mm-Bereich reicht. Durch das Festwalzen wird somit die Festigkeit auch nach den nachfolgenden Feinbearbeitungsprozessen sichergestellt und die Lagerlauffläche 2 bzw. 3 widerstandsfähiger gegen Oberflächenbeschädigungen durch Montagetransport oder Motorlauf gemacht.

In Fig. 3 ist eine andere Art eines Festwalzköpers 25 in der Seiten- und Stirnansicht dargestellt. Auch dieser Festwalzkörper 25 weist Verdickungen 26 auf, die den Verdickungen 19 und 20 der Festwalzkörper 11 und 12 vergleichbar sind. Im Gegensatz dazu sind die Verdickungen 26 allerdings, wie man aus Fig. 3 deutlich erkennen kann, in Richtung der Drehachse 27 des Festwalzkörpers 25 angeordnet. Auch die Verdickungen 26 haben wiederum Abstände 28 voneinander.

Ein in Fig. 3 nicht mehr dargestellter zweiter Festwalzkörper hätte, analog zu der Darstellung in Fig.2, dieselbe Ausgestaltung. Auch hier würden die Verdickungen 26 zwischen beiden Festwalzkörpern ineinander greifen.

Neben der radialen und axialen Anordnung der Verdickungen 19, 20 bzw. 26 sind aber auch andere Anordnungen möglich, die beispielsweise diagonal über die zylindrischen Oberflächen 17, 18, 29 verlaufen. Durch derartige Anordnungen würden beispielweise auf den tragenden Flächen 2 und 3 Muster erzeugt, die rautiert oder wellig oder sonst wie figuriert sind.

Ein besonderes Problem stellen die Mündungen 8 und 9 der Ölbohrung 7 dar. Auch die Mündungen 8 und 9 bedürfen der besonderen Verfestigung, um einer möglichen, von dort ausgehenden Rissbildung vorzubeugen. Für diese Verfestigung ist ein besonderer Festwalzkörper 30 vorgesehen, wie er in Fig. 4 in der Seitenansicht, Draufsicht und Stirnansicht dargestellt ist. Der Festwalzkörper 30 weist auf seiner zylindrischen Oberfläche 32 eine linsenförmige Verdickung 31 auf. Die linsenförmige Verdickung 31 ist in der Weise angeordnet, dass sie beim Abwälzen des Festwalzköpers 30 auf einer der tragenden Oberflächen 2 bzw. 3 stets auf die jeweilige Mündung 8 bzw. 9 der Ölbohrung 7 trifft. Die linsenförmige Verdickung 31 erhebt sich ungefähr zwischen 0,1 und 1,5 mm über die zylindrische Oberfläche 32.

Eine linsenförmige Verdickung 31, wie sie in Fig. 4 zur besonderen Verdeutlichung separat dargestellt ist, kann sich aber auch auf den Festwalzkörpern 11, 12 bzw. 25 befinden.

In Fig. 6 ist eine Kurbelwelle 33 in verkleinertem Maßstab in der Seitenansicht dargestellt. Die Kurbelwelle 33 hat die Hauptlagerzapfen 1J bis 5J. Zwischen den Hauptlagerzapfen Ji befinden sich die Hublagerzapfen 1P bis 4P. Den Anfang der Kurbelwelle 33 bildet der Zapfen 34, das Ende wird vom Flansch 35 gebildet. Neben dem erfindungsgemäßen Festwalzen der Hauptlagerzapfen Ji erfolgt auch das Festwalzen der zylindrischen Oberflächen des Zapfen 34 sowie des Flansches 35.

In Fig. 7 sind die Hublagerzapfen P besonders herausgestellt. Hierbei ist zur Verdeutlichung der Anwendung des Verfahrens vorgesehen, dass die Hublagerzapfen 1 P bis 4P gemäß der Erfindung festgewalzt werden sollen.

Bei der Kurbelwelle 37 gemäß Fig. 8 stehen die Mündungen 38 und 39 der Ölbohrungen 40 im Vordergrund der Betrachtung. Durch das Festwalzen werden die Kanten der Mündungen 38 bzw. 39 der Ölbohrungen 40 verrundet.

### Bezugszeichenliste

- 1: Kurbelwelle
- 2: tragende Fläche
- 3: tragende Fläche
- 4: Wange
- 5: Wangenabschnitt
- 6: Wangenabschnitt
- 7: Ölbohrung
- 8: Mündung Ölbohrung
- 9: Mündung Ölbohrung
- 10: Festwalzwerkzeug
- 11: Festwalzkörper
- 12: Festwalzkörper
- 13: Festwalzkörper
- 14: Dreieck
- 15: Gehäuse
- 16: Gehäuse
- 17: zylindrische Oberfläche
- 18: zylindrische Oberfläche
- 19: Verdickung
- 20: Verdickung
- 21: Abstand
- 22: Abstand
- 23: Drehachse
- 24: Drehachse
- 25: Festwalzkörper
- 26: Verdickung
- 27: Drehachse
- 28: Abstand
- 29: zylindrische Oberfläche
- 30: Festwalzkörper
- 31: linsenförmige Verdickung
- 32: zylindrische Oberfläche
- 33: Kurbelwelle
- 34: Zapfen
- 35: Flansch
- 36: Kurbelwelle
- 37: Kurbelwelle
- 38: Mündung
- 39: Mündung
- 40: Ölbohrung
- Ji: Hauptlagerzapfen
- Pi: Hublagerzapfen

## Patentansprüche

1. Verfahren zum Erhöhen der Festigkeit von tragenden Flächen an Wellen, insbesondere von zylindrischen Flächen (2, 3) an Kurbelwellen (1, 33, 36, 37) die spanabhebend vorbearbeitet sind, wobei die zylindrischen Flächen (2, 3) der Haupt (Ji)- und Hublagerzapfen (Pi) und gegebenenfalls auch des Zapfens (34) von Kurbelwellen (1, 33, 36, 37) zusätzlich Ölbohrungen aufweisen, wobei man wenigstens eine tragende Fläche mit wenigstens einem zylindrischen Festwalzkörper (11, 12, 25, 30) festwalzt, der eine Oberflächenstruktur (19, 20, 26) aufweist, **dadurch gekennzeichnet, dass** sich der Festwalzkörper über die Breite der tragenden Fläche erstreckt und dass abschließend die festgewalzte tragende Fläche mit geringer Spantiefe spanabhebend bearbeitet wird.

2. Verfahren nach Anspruch 1, **dadurch gekennzeichnet, dass** man mit drei zylindrischen Festwalzkörpern (11, 12, 13) gleichzeitig festwalzt.

3. Verfahren nach Anspruch 1, **dadurch gekennzeichnet, dass** man die Haupt(Ji)- und Hublagerzapfen (Pi) von Kurbelwellen (1, 33, 36, 37) festwalzt.

4. Verfahren nach Anspruch 1, **dadurch gekennzeichnet, dass** man den Flansch (35) von Kurbelwellen (1, 33, 36, 37) festwalzt.

5. Verfahren nach Anspruch 1, **dadurch gekennzeichnet, dass** man den Zapfen (34) von Kurbelwellen (1, 33, 36, 37) festwalzt.

6. Verfahren nach Anspruch 1, **dadurch gekennzeichnet, dass** man die Haupt (Ji)- und Hublagerzapfen (Pi), sowie den Zapfen (34) von Kurbelwellen (1, 33, 36, 37) mit einem zylindrischen Festwalzkörper (30) festwalzt, der im Bereich der Ölbohrung (7, 40) eine Verdickung (31) aufweist.

7. Verfahren nach Anspruch 2, **dadurch gekennzeichnet, dass** man mit mehreren zylindrischen Festwalzkörpern (11, 12, 13, 25) festwalzt, die Verdickungen (19, 20, 26) aufweisen, welche sich über die Breite der festzuwalzenden zylindrischen Fläche (2, 3) aneinanderreihen.

8. Verfahren nach Anspruch 1, **dadurch gekennzeichnet, dass** man die festgewalzten und spanabhebend nachbearbeiteten tragenden Flächen (2, 3) glättet.

## Claims

1. Process for increasing the strength of load-bearing surfaces of shafts, particularly of cylindrical surfaces (2,3) of crankshafts (1,33,36,37) that have been prepared by machining, where the die cylindrical surfaces (2,3) of the main bearing pin (Ji) and crankpin (Pi) and potentially also of the pin (34) of crankshafts (1,33,36,37) have additional oil bores, where at least one load-bearing surface is deep-rolled with at least one cylindrical deep-rolling roll (11,12,25,30) that has a structured surface (19,20,26), **characterised by** the deep-rolling roll extending over the full width of the load-bearing surface, and the deep-rolled surface subsequently being machined to a low cutting depth.

2. Process under claim 1, **characterised by** the use of three cylindrical deep-rolling rolls (11,12,13) simultaneously for deep-rolling.

3. Process under claim 1, **characterised by** the deep-rolling of the main bearing pin (Ji) and crankpin (Pi) of crankshafts (1,33,36,37).

4. Process under claim 1, **characterised by** the deep-rolling of the flange (35) of crankshafts (1,33,36,37).

5. Process under claim 1, **characterised by** the deep-rolling of the pins (34) of crankshafts (1,33,36,37).

6. Process under claim 1, **characterised by** the deep-rolling of the main bearing pin (Ji), crankpin (Pi), and pin (34) of crankshafts (1,33,36,37) using a cylindrical deep-rolling roll (30) that has a bulge (31) in the area of the oil bore (7,40).

7. Process under claim 2, **characterised by** deep-rolling using multiple cylindrical deep-rolling rolls (11,12,13,25) that have bulges (19,20,26) which line up over the width of the cylindrical surface (2,3) to be deep-rolled.

8. Process under claim 1, **characterised by** polishing the deep-rolled and subsequently machined load-bearing surfaces (2,3).

## Revendications

1. Procédé destiné à augmenter la résistance de surfaces porteuses sur des arbres, en particulier de surfaces cylindriques (2, 3), sur des vilebrequins (1, 33, 36, 37) qui sont préusinés par enlèvement de copeaux, selon lequel les surfaces cylindriques (2, 3) des paliers principaux (Ji) et des tourillons de levage (Pi) et, le cas échéant, aussi du maneton (34) de vilebrequins (1, 33, 36, 37) présentent de plus des orifices pour l'huile, selon lequel au moins une surface porteuse avec au moins un corps de galetage cylindrique (11, 12, 25, 30) présentant une structure de surface (19, 20, 26) effectue le galetage, **caractérisé en ce que** le corps de galetage s'étend sur toute la largeur de la surface porteuse et que la surface porteuse galetée est ensuite usinée par enlèvement de copeaux avec une faible profondeur de coupe.

2. Procédé selon la revendication 1, **caractérisé en ce que** le galetage est effectué simultanément avec trois corps de galetage cylindriques (11, 12, 13).

3. Procédé selon la revendication 1, **caractérisé en ce que** les paliers principaux (Ji) et les tourillons de levage (Pi) de vilebrequins (1, 33, 36, 37) sont gaietés.

4. Procédé selon la revendication 1, **caractérisé en ce que** la bride (35) de vilebrequins (1, 33, 36, 37) est galetée.

5. Procédé selon la revendication 1, **caractérisé en ce que** le maneton (34) de vilebrequins (1, 33, 36, 37) est gaieté.

6. Procédé selon la revendication 1, **caractérisé en ce que** les paliers principaux (Ji) et les tourillons de levage (Pi) ainsi que le maneton (34) de vilebrequins (1, 33, 36, 37) sont gaietés avec un corps de galetage cylindrique (30) qui présente un renflement (31) au niveau de l'orifice pour l'huile (7, 40).

7. Procédé selon la revendication 2, **caractérisé en ce que** le galetage est effectué avec plusieurs corps de galetage cylindriques (11, 12, 13, 25) qui présentent des renflements (19, 20, 26) s'étendant sur toute la largeur de la surface cylindrique à galeter (2, 3).

8. Procédé selon la revendication 1, **caractérisé en ce que** les surfaces porteuses galetées et retouchées par enlèvement de copeaux (2, 3) sont lissées.
